# EUROPÄISCHE PATENTSCHRIFT

(11) **EP 0 795 759 B1**
(45) Veröffentlichungstag und Bekanntmachung des Hinweises auf die Patenterteilung: **21.07.2004**
(21) Anmeldenummer: 97100516.0
(22) Anmeldetag: 15.01.1997
(51) Int. Cl.: G01S 3/784, G01S 7/48, F41G 7/22

(54) **Flugkörper zur Entdeckung und Bekämpfung feindlicher Hubschrauber**
Missile for detecting and attacking hostile helicopters
Missile pour détecter et attaquer des hélicopters hostiles

(30) Priorität: 14.03.1996 DE 19610032
(43) Veröffentlichungstag der Anmeldung: 17.09.1997
(73) Patentinhaber: LFK-Lenkflugkörpersysteme GmbH, 85521 Ottobrunn (DE)
(72) Erfinder: Gauggel, Roland, Prof. Dr., 88682 Salem (DE); Krüger, Reinhard, Dr. rer. nat., 83317 Rückstetten bei Teisendorf (DE)
(74) Vertreter: Goddar, Heinz J., Dr.

(56) Entgegenhaltungen:
- DE-A- 3 326 233
- DE-C- 3 733 681
- DE-C- 19 505 791
- FR-A- 2 686 706

## Beschreibung

Die Erfindung betrifft ein Verfahren zum Entdecken und Bekämpfen feindlicher Hubschrauber mittels eines Flugkörpers, der einen Infrarot-Suchkopf mit einer IR-Optik und einem in Abhängigkeit von einfallender IR-Strahlung elektrische Signale abgebenden IR-Sensor aufweist, der als Matrixdetektor ausgebildet und mit einer im wesentlichen in der Brennebene der IR-Optik angeordneten zweidimensionalen Matrix aus einer Vielzahl von punktförmigen Detektorzellen versehen ist, die zur Ermittlung der Zielinformation des betreffenden Hubschraubertyps von einer die Amplituden und die Frequenz der elektrischen Signale ermittelnden Auswerteinrichtung so schnell nacheinander einzeln abfragbar sind, daß eine nahezu gleichzeitige Übermittlung aller Meßwerte erfolgt, wobei der den Hubschrauber überfliegende Suchkopf die von der Antriebsturbine und der Abgasfahne des Hubschrauber nach oben abgegebene und von den Hubschrauber-Rotorblättern modulierte IR-Strahlung aufnimmt, die Winkelablage des Hubschraubers zur optischen Achse des Suchkopfs ermittelt und nach Abschluß der durch Zeitreihenanalyse der modulierten IR-Abstrahlung des Hubschraubers vorgenommenen Zieltyperkennung den mit einer Wirkladung versehenen Flugkörper bis zum Treffer in das Ziel steuert.

Aus der DE-PS 37 33 681 ist ein Verfahren bekannt, welches einen Flugkörper der vorstehend beschriebenen Art verwendet, bei dem der Matrixdetektor fest mit dem Flugkörper verbunden ist, wobei die optische Achse parallel zur Flugkörperlängsachse ausgerichtet ist. Das zur Bekämpfung von verdeckt operierenden Zielen, welche nur mit entsprechenden Ungenauigkeiten aufgeklärt werden können, erforderliche große Seh- oder Beobachtungsfeld (Field of View) wird durch die Verwendung einer Weitwinkeloptik mit verhältnismäßig geringer Auflösung realisiert. Als charakteristisches Merkmal für die Zieltyperkennung wird die durch den Betrieb der Rotoren des Hubschraubers modulierte zieltypische IR-Strahlung verwendet.

Das bekannte Verfahren hat sich durchaus bewährt. Allerdings stößt die verwendete Vorgehensweise insbesondere dann an ihre Grenzen, wenn die Geschwindigkeit des als Suchkopfträger dienenden Flugkörpers, damit auch des Matrixdetektors, bestimmte Werte überschreitet. Ist in diesen Fällen auch noch der Modulationshub des Zieles, also des zu entdeckenden Hubschraubers, klein, wie dies beispielsweise dann der Fall ist, wenn am Hubschrauber Tarnmaßnahmen vorgesehen sind, und ist womöglich auch noch der Kontrastumfang des Hintergrundes hoch, so sind Zielerkennungen und Zieltyperkennungen nur noch mit stark reduzierter Wahrscheinlichkeit realisierbar.

Andererseits ist es bereits bekannt, einen infratrotempfindlichen Suchkopf zu verwenden, bei dem ein mit hoher Auflösung betriebener Matrixdetektor mittels eines kardanischen Rahmens geschwenkt wird und dadurch in Verbindung mit der Horizontalbewegung des Flugkörpers das Beobachtungsfeld nach Zielen absucht. Bei diesem Verfahren wird die Zielerkennung und Zieltyperkennung mit Methoden der Bildverarbeitung durchgeführt, d. h., es werden Einzelbilder aufgrund Gesamtkontrastumfang, Verteilung des Kontrastes, Gradienten u.a. untersucht. Dieses Verfahren wiederum hat seine Grenzen dann, wenn die Sichtlinie zwischen dem Flugkörper und dem aufzuspürenden Hubschrauber zu lang wird bzw. unterschiedliche Hubschrauber ähnliche geometrische Merkmale aufweisen. In diesem Fall ist der bildverarbeitende Suchkopf zwar noch in der Lage, Hubschrauber als solche zu erkennen, jedoch ist die Wahrscheinlichkeit für eine erfolgreiche Zieltyperkennung deutlich abgesenkt.

Aus der DE-PS 33 26 233 ist es bereits bekannt, mittels eines Zielsuchkopfes zwischen einer Zielsuchphase, bei der das gesamte Gesichtsfeld abgetastet wird, und einer Anflugphase, bei der nur die unmittelbare Umgebung des Zielpunktes abgetastet wird, zu unterscheiden und dementsprechend die Abtastbewegung umzuschalten. Hierbei ist es notwendig, in der Zielsuchphase auch bereits die Zieltyperkennung durchzuführen.

Der Erfindung wird die Aufgabe zugrundegelegt, das eingangs genannte Verfahren dahingehend zu verbessern, daß auch bei hoher Flugkörpergeschwindigkeit selbst getarnte Ziele noch einwandfrei angesprochen und zieltypmäßig identifiziert werden können.

Erfindungsgemäß wird diese Aufgabe dadurch gelöst, daß der Matrixdetektor in einer Zielsuchphase zum Abscannen des Zielgebietes periodisch um eine parallel zur Flugrichtung des Flugkörpers liegende Achse hin- und hergeschwenkt wird; daß der Matrixdetektor nach Zielansprache zum Einleiten einer Zieltyperkennungsphase angehalten und auf das angesprochene Ziel hin stabilisiert wird; daß in der Zieltyperkennungsphase bei unverändertem Weiterflug und Beibehaltung der Bahn des Flugkörpers das angesprochene Ziel zur Zieltyperkennung einer Zeitreihenanalyse unterworfen wird; und daß in dem Fall, daß die Zeitreihenanalyse auf Grund des Erkennens der modulierten IR-Abstrahlung des angesprochenen Zieles als im Zielanflug anzusteuernder Flugkörper die Zieltyperkennungsphase beendet, der Endanflug eingeleitet und der Flugkörper bis zum Treffer im Ziel durch den bildverarbeitenden Suchkopf gesteuert wird.

Dabei kann vorgesehen sein, ein Matrixdetektor verwendet wird, bei dem die Detektorzellen aus CdHgTe oder InSb oder ähnlich IR-sensiblem Material bestehen und alle im gleichen Wellenlängenbereich von 3 bis 15 *µ*m oder einem Teilbereich davon empfindlich sind.

Die Erfindung schlägt hierbei ggf. auch vor, daß zur gesteuerten Veränderung des Sehfeldes eine IR-Optik mit einem veränderbaren maximalen Seitenwinkel verwendet wird.

Nach der Erfindung kann auch so vorgegangen werden, daß das periodische Verschwenken des Matrixdetektors im wesentlichen im Horizontalflug des Flugkörpers durch die Verwendung eines kardanischen Rahmens erfolgt.

Der Erfindung liegt die überraschende Erkenntnis zugrunde, daß es gelingt, selbst bei Flugkörpern hoher Geschwindigkeit eine einwandfreie Zielansprache und eine zuverlässige Zieltyperkennung zu gewährleisten, indem der Matrixdetektor, der beim gattungsgemäßen Stand der Technik starr mit dem Flugkörper verbunden ist, in einer Zielsuchphase rasch hin- und hergeschwenkt wird, wodurch ein weiträumiges Abscannen des Beobachtungsfeldes möglich ist. Sobald auf diese Weise ein Hubschrauber als solcher erkannt ist, wird der Matrixdetektor gegenüber dem Flugkörper auf das Ziel festgelegt, woraufhin dann die Zieltyperkennung entsprechend der DE-PS 37 33 681 erfolgt. Die aus der vorgenannten Druckschrift bekannten Ausführungsformen der gattungsgemäßen Vorrichtung sind natürlich insgesamt auch bei der Erfindung sinngemäß anwendbar, so daß zur Ergänzung der diesbezüglichen Offenbarung insoweit auf die DE-PS 33 37 681 verwiesen wird.

Bei der Erfindung werden die den beiden eingangs diskutierten Erkennungskonzepten in bestimmten Anwendungsfällen innewohnenden Schwächen vermieden. Dabei wird der grundsätzliche elektromechanische Aufbau des bildverarbeitenden Suchkopfes, wie er bei dem vorgeschlagenen Scan-Verfahren vorgesehen ist, beibehalten. Im Gegensatz zum gattungsgemäßen Stand der Technik, bei dem ja bereits eine Zieltyperkennung durch Überprüfung der Hubschrauber-Abstrahlung auf Modulation vorgesehen ist, wird das Zielgebiet zunächst zum Auffassen und Ansprechen eines Zieles durch Schwenken des Matrixdetektors bei Horizontalbewegung des Flugkörpers durch Scannen abgetastet. Bei Ansprechen eines Zieles wird der Detektor angehalten und auf das Ziel hin stabilisiert, wobei der Flugkörper seine Bahn beibehält. Mittels des auf das Ziel stabilisierten Detektors wird während des Weiterfluges des Flugköpers die Zieltyperkennung durch eine Zeitreihenanalyse der modulierten IR-Abstrahlung des Hubschraubers ausgeführt. Nachdem die Zieltypüberprüfung abgeschlossen ist, wird der Endanflug eingeleitet und der Flugkörper bis zum Treffer im Ziel durch den bildverarbeitenden Suchkopf gesteuert.

Bei der Erfindung wird somit die Zieltyperkennung unter der für eine Modulationserkennung optimalen Randbedingung eines mechanisch stabilisierten Sensors durchgeführt. Die zur Modulationserkennung notwendigen Anforderungen an die Rechnerleistungen sind im Vergleich zum gattungsgemäßen Stand der Technik sehr gering, da nur eine kleine Umgebung um das zuvor von der Bildverarbeitung erkannte Ziel "Hubschrauber" auf Modulationen hin untersucht werden muß. Somit wird derjenige Teil der Bildverarbeitung, der bei dem bekannten Scan-Verfahren den gestellten Anforderungen hinsichtlich der Zieltyperkennung in bestimmten Anwendungsfällen nicht gerecht wird, durch die unter idealen Bedingungen sehr robuste Zieltyperkennung durch Zeitreihenanalyse nach dem gattungsgemäßen Stand der Technik ersetzt, wobei hier die idealen Bedingungen durch reale Bedingungen ersetzt werden, die weitestgehend den idealen Bedingungen nahekommen, nämlich durch Verwendung eines stabilisierten Detektors bei der Zieltypermittlung.

Weitere Merkmale und Vorteile der Erfindung ergeben sich aus der nachstehenden Beschreibung, in der ein Ausführungsbeispiel anhand der schematischen Zeichnung im einzelnen erläutert ist.

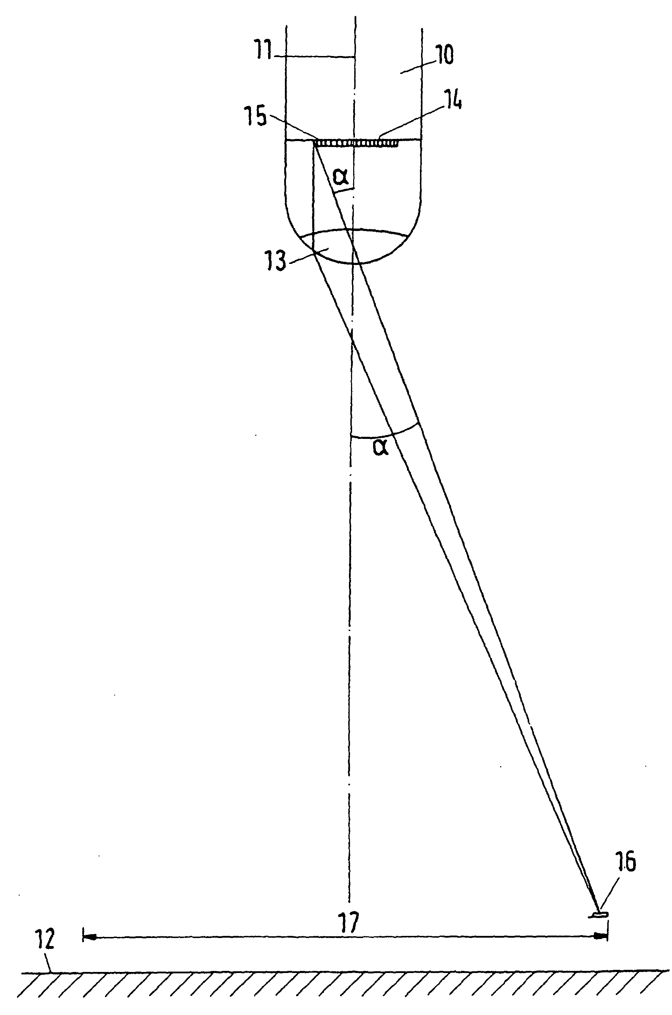

Dabei zeigt die aus einer einzigen Figur bestehenden Zeichnung ein Ausführungsbeispiel des Verfahrens nach der Erfindung in einem schematisch dargestellten Anwendungsfall, parallel zum Erdboden gesehen.

In der Zeichnung ist ein Suchkopf 10 gezeigt, wobei nur der vordere (aktive) Teil wiedergegeben ist. Der Suchkopf 10 hat eine optische Achse 11 und ist an seiner Spitze mit einer IR-Optik 13 versehen, die in der Zeichnung der Einfachheit halber als eine Sammellinse dargestellt ist. In der Praxis wird verständlicherweise eine mehrteilige Optik verwendet, vorzugsweise eine Optik aus verstellbaren Spiegeln, wobei Filter, Blenden und dergleichen hinzukommen können. In der Brennebene der Optik 13 ist eine Matrix 14 aus einer Vielzahl punktförmiger Detektorzellen 15 angeordnet. Diese Detektorzellen 15, üblicherweise Pixel genannt, sprechen auf einen vorgegebenen Wellenbereich an, und zwar auf eine IR-Strahlung zwischen 3 und 14 *µ*m. In der Praxis kann die Matrix 14 beispielsweise eine Quadratmatrix aus 16000 Pixeln sein. Die Pixeln bestehen vorzugsweise aus CdHgTe oder InSb (D ≈ 10¹⁰ - 10¹¹ cm W⁻¹ Hz^{1/2}) oder einem Material ähnlicher IR-Sensibilität. Die elektrischen Ausgangssignale der einzelnen Pixel werden einer - auf der Zeichnung nicht dargestellten - Auswerteinrichtung zugeführt, wobei diese Auswerteinrichtung die Pixeln fast gleichzeitig abfragt bzw. deren Ausgangssignale gleichzeitig aber gesondert aufnimmt. Die Auswertung durch die Auswerteinrichtung liefert dann zum einen den exakten Ort der IR-Strahlungsquelle und zum anderen die genaue Frequenz der Strahlungsmodulation (wenn eine solche vorhanden ist).

Auf der Zeichnung ist der Suchkopf 10 von oben her auf den angedeuteten Erdboden 12 gerichtet, wobei mit 16 eine IR-Strahlungsquelle, nämlich ein Hubschrauber, bezeichnet ist, der sich innerhalb des Sehfeldes 17 des Suchkopfes 10 befindet. Dabei ist der Hubschrauber 16 im Bereich des Randes des Sehfeldes 17 und wird deshalb auch einschließlich seiner Hintergrundstrahlung auf den entsprechenden Pixel am Rande der Matrix 14 abgebildet, wodurch die auf dem Pixel 15 auftreffende Strahlung größer ist als diejenige, die auf die Nachbarpixel auftritt. Die Auswerteinrichtung mißt die Strahlung auf allen Pixeln, auf die eine erhöhte Strahlung auffällt, und zwar mindestens so lange, bis eine eventuell vorhandene Modulation in dem für einen Hubschrauber charakteristischen Frequenzbereich von etwa 10 bis 30 Hz erkannt werden kann. Wird eine solche Modulationsfrequenz erkannt, dann ist es auch möglich, auf der Grundlage der exakt bestimmten Frequenz den Hubschrauber-Typ zu ermitteln, weil Hubschrauber innerhalb gewisser Grenzen mit relativ konstanter Drehzahl ihres Rotors fliegen, so daß die ermittelte Modulationsfrequenz den Hubschrauber-Typ festlegt, was eine Hubschraubertyp-Erkennung ermöglicht. Die Lage desjenigen Pixels, auf den die IR-Modulation festgestellt worden ist, ergibt die Zielinformation, also den Ablagewinkel des Zielhubschraubers 16 von der optischen Achse 11.

Erfindungsgemäß ist die Matrix 14 inklusive IR-Optik, im folgenden auch als Matrixdetektor bezeichnet, so ausgebildet, daß sie in einer Anfangsphase, in der ein Ziel gesucht werden soll, rasch um eine in Längsrichtung des Flugkörpers, der den Suchkopf trägt, liegende Achse hin- und herschwenkbar ist, wodurch das Beobachtungsfeld abgescannt werden kann. Sobald eine Sichtverbindung zu einem Hubschrauber 16 hergestellt worden ist, wird der Matrixdetektor angehalten und auf den Hubschrauber 16 hin stabilisiert, woraufhin die vorstehend beschriebene Zieltyperkennung durch Zeitreihenanalyse der durch die Rotorblätter des Hubschraubers modulierten IR-Strahlung erfolgt. Nach Abschluß der Zieltyperkennung übernimmt der Suchkopf die Steuerung des mit einer entsprechenden Wirkladung versehenen Flugkörpers bis zum Treffer in dem durch den Hubschrauber 16 gebildeten Ziel.

Die in der vorstehenden Beschreibung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sind.

### Bezugszeichenliste

- 10: Suchkopf
- 11: optische Achse
- 13: IR-Optik
- 14: Matrix
- 15: Detektorzelle
- 16: Hubschrauber
- 17: Sehfeld

## Patentansprüche

1. Verfahren zum Entdecken und Bekämpfen feindlicher Hubschrauber mittels eines Flugkörpers, der einen Infrarot-Suchkopf mit einer IR-Optik und einem in Abhängigkeit von einfallender IR-Strahlung elektrische Signale abgebenden IR-Sensor aufweist, der als Matrixdetektor ausgebildet und mit einer im wesentlichen in der Brennebene der IR-Optik angeordneten zweidimensionalen Matrix aus einer Vielzahl von punktförmigen Detektorzellen versehen ist, die zur Ermittlung der Zielinformation des betreffenden Hubschraubertyps von einer die Amplituden und die Frequenz der elektrischen Signale ermittelnden Auswerteinrichtung so schnell nacheinander einzeln abfragbar sind, daß eine nahezu gleichzeitige Übermittlung aller Meßwerte erfolgt, wobei der den Hubschrauber überfliegende Suchkopf die von der Antriebsturbine und der Abgasfahne des Hubschrauber nach oben abgegebene und von den Hubschrauber-Rotorblättern modulierte IR-Strahlung aufnimmt, die Winkelablage des Hubschraubers zur optischen Achse des Suchkopfs ermittelt und nach Abschluß der durch Zeitreihenanalyse der modulierten IR-Abstrahlung des Hubschraubers vorgenommenen Zieltyperkennung den mit einer Wirkladung versehenen Flugkörper bis zum Treffer in das Ziel steuert, **dadurch gekennzeichnet, daß** der Matrixdetektor in einer Zielsuchphase zum Abscannen des Zielgebietes periodisch um eine parallel zur Flugrichtung des Flugkörpers liegende Achse hin- und hergeschwenkt wird; daß der Matrixdetektor nach Zielansprache zum Einleiten einer Zieltyperkennungsphase angehalten und auf das angesprochene Ziel hin stabilisiert wird; daß in der Zieltyperkennungsphase bei unverändertem Weiterflug und Beibehaltung der Bahn des Flugkörpers das angesprochene Ziel zur Zieltyperkennung einer Zeitreihenanalyse unterworfen wird; und daß in dem Fall, daß die Zeitreihenanalyse auf Grund des Erkennens der modulierten IR-Abstrahlung des angesprochenen Zieles als im Zielanflug anzusteuernder Flugkörper die Zieltyperkennungsphase beendet, der Endanflug eingeleitet und der Flugkörper bis zum Treffer im Ziel durch den bildverarbeitenden Suchkopf gesteuert wird.

2. Verfahren nach Anspruch 1, **dadurch gekennzeichnet, daß** ein Matrixdetektor verwendet wird, bei dem die Detektorzellen aus CdHgTe oder InSb oder ähnlich IR-sensiblem Material bestehen und alle im gleichen Wellenlängenbereich von 3 bis 15 *µ*m oder einem Teilbereich davon empfindlich sind.

3. Verfahren nach Anspruch 1 oder 2, **dadurch gekennzeichnet, daß** zur gesteuerten Veränderung des Sehfeldes eine IR-Optik mit einem veränderbaren maximalen Seitenwinkel verwendet wird.

4. Verfahren nach einem der vorangehenden Ansprüche, **dadurch gekennzeichnet, daß** das periodische Verschwenken des Matrixdetektors im wesentlichen im Horizontalflug des Flugkörpers durch die Verwendung eines kardanischen Rahmens erfolgt.

## Claims

1. Method for detecting and combatting enemy helicopters by means of a missile that has an infrared homing head with an infrared lens and an infrared sensor emitting electrical signals in dependence on incoming IR-radiation and having the form of a matrix detector being provided with a two-dimensional matrix consisting of a number of punctiform detector cells arranged essentially in the focal plane of the infrared lens, said detector cells being retrievable individually and quickly one after the other by an evaluation device, such that the measured values are simultaneously transferred, said evaluation device determining the amplitude and frequency of electrical signals for obtaining target information of the concerned type of helicopter, whereby the homing head flying over the helicopter picks up the infrared radiation emitted upward from the propulsion turbine and exhaust gas plume of the helicopter and modulated by the helicopter's blades, determines the helicopter's position to the optical axis of the homing head and steers the missile equipped with an active charge until it hits the target, after completion of the target-type recognition performed by time series analysis of the modulated infrared radiation of the helicopter, **characterized in that**
during a target acquisition phase scanning the target area, the matrix detector is periodically swung back and forth around the axis situated parallel to the flight direction of the missile; that the matrix detector is stopped after the target acquisition to initiate a target-type recognition phase and stabilized on the acquired target; and that in the target-type recognition phase with unchanged continued flight and maintaining the trajectory of the missile, the acquired target is subjected to a time series analysis for the target-type recognition; and that based on recognition of the modulated infrared radiation of the detected target as a flying object to be headed for in. a target approach, the time series analysis ends the target-type recognition phase, the final approach is initiated and the missile is steered by the image-processing homing head until it hits the target.

2. Method according to claim 1, **characterized in that** a matrix detector is used in which the detector cells are made of a material selected from a group consisting of CdHgTe, InSb or a similarly infrared-sensitive material and all are sensitive in the same wavelength range of 3µm to 15µm or in a sub-range thereof.

3. Method according to claim 1 or 2, **characterized in that** an infrared lens with a variable maximum lateral angle is used for modifying the field of view in a controlled manner.

4. Method according to one of the preceding claims, **characterized in that** the periodic swinging of the matrix detector essentially in level flight of the missile is caused by use of a gimbal.

## Revendications

1. Procédé pour détecter et attaquer des hélicoptères hostiles, à l'aide d'un missile présentant une tête chercheuse à infrarouge, munie d'une optique IR et d'un capteur IR émettant des signaux électriques en fonction du rayonnement IR incident, capteur IR réalisé sous la forme de détecteur matriciel, et muni d'une matrice bidimensionnelle, disposée sensiblement dans le plan focal de l'optique IR et formée d'une pluralité de cellules de détecteurs ponctuels, qui sont interrogeables individuellement les unes après les autres, pour déterminer l'information de cible du type d'hélicoptère concerné, par un dispositif d'évaluation déterminant l'amplitude à la fréquence des signaux électriques, l'interrogation se faisant à une rapidité faisant que s'effectue une transmission à peu près simultanée de toutes les valeurs de mesure, la tête chercheuse, survolant l'hélicoptère, captant le rayonnement IR, émis vers le haut par la turbine de propulsion et par le sillage de gaz d'échappement de l'hélicoptère et modulé par les pales de rotor de l'hélicoptère, déterminant l'écart angulaire de l'hélicoptère par rapport à l'axe optique de la tête chercheuse et, après achèvement de l'identification de type de cible, effectué par analyse des séries chronologiques du rayonnement IR émis et modulé, la tête chercheuse commandant le missile muni d'une charge active jusqu'à la frappe de la cible, **caractérisé en ce que** le détecteur matriciel, lors d'une phase de recherche de cible, est pivoté périodiquement dans un sens et dans l'autre autour d'un axe situé parallèlement à la direction de vol du missile, dans le but de scruter la zone cible, **en ce que** le détecteur matriciel, après réaction de la cible, est immobilisé pour lancer une phase d'identification de type de cible, et est stabilisé sur la cible ayant réagi ; **en ce que**, dans la phase d'identification de type de cible, alors que la continuation du vol se fait de façon inchangée et en conservant la trajectoire du missile, la cible ayant réagi est soumise à une analyse des séries chronologiques, dans un but d'identification,de type de cible ; et **en ce que** dans le cas où l'analyse des séries chronologiques, du fait de l'identification du rayonnement IR modulé de la cible ayant réagi, la phase d'identification de cible est achèvée en commandant le missile pour effectuer le vol d'approche de cible, en lançant le vol d'approche finale, et le missile est commandé jusqu'à la frappe à la cible, au moyen de la tête chercheuse travaillant par traitement d'images.

2. Procédé selon la revendication 1, **caractérisé en ce qu'**on utilise un détecteur matriciel, pour lequel les cellules de détecteur sont formées de CdHgTe ou d'InSb ou d'un matériau analogue sensible aux IR, et toutes sont sensibles dans la même plage de longueur d'ondes, allant de 3 à 15 µm, ou dans une plage partielle de celle-ci.

3. Procédé selon la revendication 1 ou 2, **caractérisé en ce que**, dans le but d'une modification commandée du champ de vision, on utilise une optique IR, ayant un angle de gisement maximal, modifiable..

4. Procédé selon l'une des revendications précédentes, **caractérisé en ce que** le pivotement périodique du détecteur matriciel s'effectue essentiellement en vol horizontal du missile, de par l'utilisation d'un cadre monté à la Cardan.
